# EUROPEAN PATENT SPECIFICATION

(11) **EP 0 525 751 B1**
(45) Date of publication and mention of the grant of the patent: **25.06.1997**
(21) Application number: 92112954.0
(22) Date of filing: 29.07.1992
(51) Int. Cl.: C08F 20/60

(54) **Process for the preparation of an aqueous dispersion of water-soluble cationic polymer**
Verfahren zur Herstellung einer Wässrigen Dispersion eines wasserlöslichen kationischen Polymers
Procédé de préparation d'une dispersion aqueuse d'un monomère cationique soluble dans l'eau

(30) Priority: 30.07.1991 JP 211309/91
(43) Date of publication of application: 03.02.1993
(73) Proprietor: HYMO CORPORATION, Tokyo 141 (JP)
(72) Inventor: Takeda, Hisao, Zama-shi, Kanagawa-ken (JP)
(74) Representative: Vossius, Volker, Dr.

(56) References cited:
- EP-A- 0 183 466
- EP-A- 0 262 945

## Description

### BACKGROUND OF THE INVENTION

### 1. Field of the Invention

The present invention relates to a process for the preparation of an aqueous dispersion of a water-soluble cationic polymer for use in waste water treatment as a flocculant or a dehydrating agent, and in paper manufacturing as a paper chemical.

### 2. Background Art

Various types of processes have been utilized for the preparation of the aforesaid water-soluble cationic polymer. A stationary aqueous phase polymerization is a well-known process. Japanese Patent Laid-Open Application No.54-102388 discloses a water-in-oil type emulsion polymerization process. Japanese Patent Laid-Open Application No.54-69169 teaches a suspension polymerization process in a hydrophobic solvent.

There are a number of disadvantages associated with the known prior art processes such as those as set forth above.

In the stationary aqueous phase polymerization, it is necessary to employ a monomer concentration of more than 10 % by weight in order to obtain a polymer having a suitable high-molecular weight.

The polymerization in such a higher monomer concentration gives a gelatinous hydrated polymer which is difficult to dissolve in the aqueous medium employed; therefore, it is necessary to ship the polymer product in a fluid form as a diluted solution after further dilution or in a powdered product after drying.

Shipment of the polymer in a diluted solution increases the costs of transportation, whereas shipment in a powdered form increases the cost of fuel for drying. Further, when heated in the drying process, three-dimensional crosslinking of the polymer may occur, yielding a partially water insoluble polymer unpreferably.

The inflammability of product as well as a wasteful use of expensive organic solvent are the drawbacks of the water-in-oil type emulsion polymerization process.

On the other hand, suspension polymerization in a hydrophobic solvent employs an inflammable solvent such as cyclohexane and toluene; therefore, plant investment costs are very high.

Japanese Patent Laid-Open Application No.50-70489 teaches a precipitation polymerization in an ammonium sulfate solution for the preparation of a nonionic or an anionic water-soluble polymer. The plant investment costs for the precipitation polymerization process are not expensive preferably; however, the resulting polymer particles are sticky and have a tendency to agglomerate each other to thereby give a large polymer mass which is not easy to handle.

Further, Japanese Patent Laid-Open Application No.61-123610 proposes a process for the polymerization or copolymerization of a quaternary benzyl chloride salt of dimethylaminoethyl methacrylate or acrylate as a cationic monomer in which the polymerization is carried out in an aqueous salt solution which does not dissolve the resulting polymer or copolymer, and in the presence of a polymer which is soluble in the salt solution to thereby provide a cationic water-soluble polymer in a dispersion state. This proposal may be effectual in solving problems associated with the known prior art processes as set forth above; however, the process has the disadvantage that the cationic monomer which can be used is limited only to the quaternary benzyl chloride salts of dimethylaminoethyl methacrylate or acrylate.

Therefore, when a dispersion of a cationic water-soluble polymer comprising hydrophobic groups having other properties or being more hydrophobic is required, such a dispersion cannot be provided according to these methods.

Accordingly, it is the principal object of the present invention to provide a novel polymerization process for the preparation of a cationic water-soluble polymer in a dispersion state. The process must satisfy the following requirements:
(1) Must be carried out in an aqueous solution in the absence of an inflammable solvent.
(2) The investment costs for the polymer dispersion plant must not be expensive.
(3) The resulting polymer particles must not be sticky, and must not have a tendency to form a gel; therefore, the dispersion must be easily handled.
(4) The resulting polymer dispersion must have a good fluidity in high concentrations, thus decreasing the costs of transportation.
(5) A quaternary salt other than the quaternary benzyl chloride salt, such as quaternary aliphatic halide salts or quaternary aromatic halide salts of dimethylaminoethyl methacrylate or acrylate must be employed as the cationic monomer.
(6) It must be possible to control the degree of hydrophobicity of the polymer produced in the dispersion by choosing the types and amounts of monomers.
(7) An aqueous dispersion of a cationic water-soluble polymer having high hydrophobicity.

### SUMMARY OF THE INVENTION

In accordance with the present invention the foregoing objects and advantages are readily obtained.

The present invention relates to a polymerization process for the preparation of an aqueous dispersion of a water-soluble cationic polymer by use of a cationic quaternary monomer obtained by the quaternization of dimethylaminoethyl methacrylate or acrylate, with a specific aliphatic halide or aromatic halide. The polymerization is carried out in an aqueous salt solution which does not dissolve the resulting polymer or copolymer, and in the presence of a dispdrsant of a specific cationic polymer which is soluble in the salt solution.

More particularly, the present invention relates to a polymerization process for the preparation of an aqueous dispersion of a water-soluble cationic polymer by use of a cationic monomer mixture comprising one or more of cationic monomers in an amount of 5 to 100 % % by mole, represented by the following general formula (1): 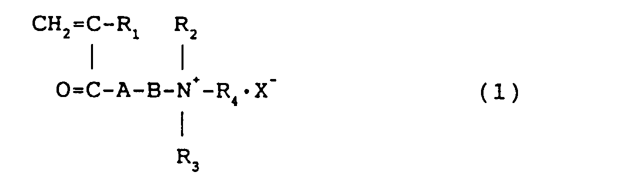 [wherein A=O or NH; B=CH₂CH₂, CH₂CH₂CH₂ or CH₂CHOHCH₂; R₁=H or CH₃; R₂,R₃=CH₃ or CH₂CH₃; R₄=(CH₂)ₙCH₃ (wherein n=3 to 9) or C₂H₄C₆H₅ ; X⁻= anionic counterion];
one or more of cationic monomers in an amount of 0 to 50 % by mole, represented by the following general formula (2): 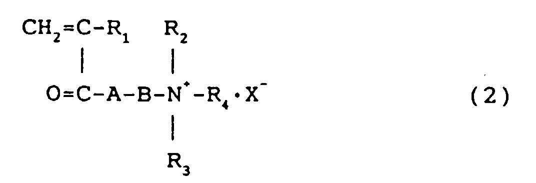 [wherein A=O or NH; B=CH₂CH₂, CH₂CH₂CH₂ or CH₂CHOHCH₂; R₁=H or CH₃; R₂,R₃=CH₃ or CH₂CH₃; R₄=H, CH₃ or CH₂CH₃ (wherein the total carbon atoms of R₂, R₃ and R₄ do not exceed 5), X⁻= anionic counterion];
and methacrylamide or acrylamide in an amount of 0 to 95 % by mole.

In the copolymerization, the preferred molar ratio of the monomer represented by the general formula (1) to the monomer by (2) is always more than 1.

The polymerization or copolymerization is carried out in an aqueous salt solution which does not dissolve the resulting polymer or copolymer, and in the presence of a dispersant of a specific cationic polymer which is soluble in the salt solution, the specific cationic polymer having one or more of organic residues in an amount of more than 20 % by mole, and being obtained from a monomer represented by the above general formula (2).

Any monomers represented by the general formula (1) may be employed; however, preferred examples include quaternary salts obtained by the reaction of an alkyl halide having C₄ to C₁₀ carbon atoms or a 2-haloethylbenzene with dimethylaminoethyl methacrylate or acrylate; diethylaminoethyl methacrylate or acrylate; dimethylaminohydroxypropyl methacrylate or acrylate; or dimethylaminopropyl methacrylamide or acrylamide.

Quaternary monomers obtained by the reaction of an alkyl halide having C₃ or lower carbon atoms are not suitable because the resulting polymer is partly soluble in the salt solution, whereas quaternary monomers obtained from an alkyl halide having C₁₁ or higher carbon atoms are also not suitable because they are insoluble in the salt solution.

Typical examples of the cationic monomers represented by the general formula (2) include monomers obtained by neutralization with hydrochloric acid or sulfuric acid, or by quaternization with methyl chloride or dimethyl sulfate of a monomer selected from the group consisting of dimethylaminoethyl methacrylate or acrylate, diethylaminoethyl methacrylate or acrylate, dimethylaminohydroxypropyl methacrylate or acrylate, and dimethylaminopropyl methacrylamide or acrylamide.

Other cationic monomers which satisfy the general formula (2) may be employed.

In addition to the monomers which are (meth)acrylamide or represented by the general formula (1) or (2), other monomers such as acrylonitrile, methyl acrylate, ethyl acrylate may be employed as a comonomer in an amount of up to the limit of solubility of the comonomer in the aqueous salt solution, so long as the resulting copolymer is water-soluble.

It is prerequisite for the process of the present invention that the resulting copolymer is insoluble in the aqueous salt solution as a polymerization medium; that is to say, the copolymer can be separated out of the salt solution by salting-out.

Homopolymers which are most readily separated out are polymers obtained from the monomers represented by the general formula (1), whereas homopolymers obtained from the monomers represented by the general formula (2) cannot be separated out.

The properties, in terms of salting-out, of homopolymers obtained from methacrylamide or acrylamide are intermediate between those of the polymers obtained respectively from the monomers represented by the general formulas (1) and (2); therefore, the copolymerization of a monomer represented by the formula (2) should be carried out in the presence of a monomer, in a molar ratio of more than 1, represented by the formula (1).

Contrary to the resulting copolymer, the dispersant employed in the polymerization should be readily soluble in the aqueous salt solution; therefore, the preferred dispersant comprises a cationic polymer obtained from the monomers represented by the formula (2), with the polymer having one or more of organic residues in an amount of more than 20 % by mole.

The most preferred dispersant is a homopolymer obtained from one of the monomers represented by the general formula (2). Acrylamide is a typical comonomer which may be copolymerized with the monomer represented by the formula (2); however, any monomers may be used, provided that they are soluble in the salt solution.

In the present invention, polymerization is carried out in the presence of the dispersant with stirring by use of the monomer or monomer mixture in an aqueous salt solution. The preferred monomer concentration is in a range from 5 to 30 % by weight.

Further, insolubility of the resulting polymer or copolymer in the aqueous salt solution used as a dispersion medium is a prerequisite for the salt solution used.

Any salts may be employed for preparing the aqueous dispersion, so long as they do not dissolve the resulting polymer. Typical examples of the salts include polyvalent anion salts such as sodium sulfate, ammonium sulfate, magnesium sulfate, aluminium sulfate, and sodium dihydrogenphosphate.

As for the salt concentration, it will depend on the molar ratio of cationic monomers represented by the formula (1) and (2), and the kind of the salt employed. In general a range of from 15 % by weight or beyond, up to the limit of solubility of the salt is preferred.

The preferred amount of dispersant is 1 to 10 % by weight, based on the total weight of monomers. When the amount is less than 1 % by weight, the polymerization gives sticky polymer particles which tend to result in separation of a bulky polymer mass unpreferably. Inversely, when it is more than 10 % by weight, no additional merits can be obtained.

The polymerization temperature will depend on the kind of the initiator. Any temperature may be employed, with proviso that the particular initiator can function.

Further, any initiator may be employed such as redox or azo type initiators.

The process of the present invention is characterized in that the polymerization of a cationic monomer by the formula (1) or mixture thereof, is carried out in an aqueous salt solution which is a dispersion medium, with stirring in the presence of a cationic polymer dispersant which is soluble in the aqueous salt solution. The role of the salt in the dispersion medium, in this case, is to prevent the resulting polymer from being dissolved in said dispersion medium.

Although the role of the dispersant of cationic polymer has not been fully elucidated, it is presumed to act as a protective colloid, keeping the polymer particles highly dispersed.

In spite of the water-soluble cationic polymer, the resulting polymer is difficult to dissolve in a salt solution, because the amino group of the cationic monomer by the general formula (1) has been combined with an alkyl group which is strongly hydrophobic.

The following examples will further illustrate the present invention, which by no means limit the invention.

### DETAILED DESCRIPTION OF THE PREFERRED EMBODIMENTS

### EXAMPLE I

In a 1-liter, 5-necked separable flask was placed 2.7 g of a homopolymer of acryloyloxyethyltrimethylammonium chloride as a dispersant, 112.3 g of ammonium sulfate and 392.3 g of deionized water to prepare a solution. To the solution were added 65.8 g (90% by mole) of acrylamide and 26.9 g (10% by mole) of 90 % aqueous solution of acryloyloxyethyldimethylbutylammonium chloride, followed by heating to 50°C and the air inside was displaced by nitrogen.

To the mixture was added 1.8 g of 1 % aqueous solution of 2,2'-azobis (2-amidinopropane) hydrochloride, followed by polymerization at 50°C for 10 hours with stirring to thereby provide polymer particles finely dispersed in a salt solution.

The polymer dispersion had a viscosity of 2.5 Pa·s (2500 cp) (at 25°C), and the viscosity of the 0.5 % polymer in 4 % aqueous NaCl solution was 0.028 Pa·s (28 cp).

### EXAMPLE II

In the separable flask employed in Example I were placed 2.7 g of a copolymer (molar ratio = 50:50) of acrylamide with acryloyloxyethyltrimethylammonium chloride as a dispersant, 102.3 g of sodium sulfate, followed by dissolving in 398.2 g of deionized water.

To the solution were added 37.4 g (75 % by mole) of acrylamide, 50.3 g (20 % by mole) of 90 % aqueous solution of methacryloyloxyethyldimethylhexylammonium bromide, 9.1 g of 80 % aqueous solution of acrylamidepropyltrimethylammonium chloride, followed by heating to 50°C and the air inside was displaced by a nitrogen.

To the mixture was further added 1.8 g of 1 % aqueous solution of 2,2'-azobis(2-amidinopropane) hydrochloride as an initiator, followed by polymerization at 50°C for 10 hours to thereby provide polymer particles finely dispersed in an aqueous salt solution.

The polymer solution had a viscosity (at 25°C) of 3.2 Pa·s (3200 cp). The viscosity of the 0.5 % polymer in 2 % aqueous ammonium sulfate solution was 0.035 Pa·s (35 cp).

### EXAMPLE III

In the separable flask employed in Example I were placed 2.7 g of a homopolymer of methacryloyloxyethyltrimethylammonium chloride as a dispersant, 112.3 g of sodium sulfate, followed by dissolving in 386.2 g of deionized water.

To the solution were added 25.0 g (65 % by mole) of acrylamide, 59.7 g (25 % by mole) of 90 % aqueous solution of acrylamidopropyldimethyloctylammonium iodide, 14.1 g of 80 % aqueous solution of methacryloyloxyethyltrimethylethylammonium chloride, followed by heating to 50°C and the air inside was displaced by nitrogen.

To the mixture was further added 1.8 g of 1 % aqueous solution of 2,2'-azobis (2-amidinopropane) hydrochloride as an initiator, followed by polymerization at 50°C for 10 hours to thereby providing polymer particles finely dispersed in an aqueous salt solution.

The polymer dispersion has a viscosity (at 25° ) of 4.5 Pa·s (4500 cp) which is lowered to 0.5 Pa·s (500 cp) after addition of 20g of ammonium sulfate to the dispersion.

The viscosity of the 0.5 % polymer in 2 % aqueous ammonium sulfate solution was 0.040 Pa·s (40 cp).

### EXAMPLE IV

In the separable flask employed in Example I were placed 2.7 g of a homopolymer of acryloyloxyethyltrimethylammonium chloride as a dispersant, and 112.3 g of sodium sulfate, followed by dissolving in 398.2g of deionized water.

To the solution were added 5.8 g (20 % by mole) of acrylamide, 67.2 g (50 % by mole) of 90 % aqueous solution of acrylamidopropyldimethylethylbenzeneammonium chloride, 29.6 g (30 % by mole) of 80 % aqueous solution of acryloyloxyethyltrimethylammonium chloride, followed by heating to 50°C and the air inside was displaced by nitrogen.

To the mixture was added 1.8 g of 1 % aqueous solution of 2,2'-azobis (2-amidinopropane) hydrochloride as an initiator, followed by polymerization at 50°C for 10 hours to thereby providing polymer particles finely dispersed in a salt solution.

The polymer dispersion had a viscosity (at 25°C) of 2.7 Pa·s (2700 cp). The viscosity of the 0.5 % polymer in 2 % aqueous ammonium sulfate solution was 0.023 Pa·s (23 cp).

### COMPARATIVE EXAMPLE I

In the separable flask employed in Example I were placed 2.7 g of a homopolymer of acryloyloxyethyltrimethylammonium chloride as a dispersant, 112.3 g of ammonium sulfate, followed by dissolving the contents in 390.6 g of deionized water.

To the solution were added 50.6 g (80 % by mole) of acrylamide, 43.8 g (20 % by mole) of 90 % aqueous solution of acryloyloxyethyldimethylpropylammonium chloride, followed by heating to 50°C and the air inside was displaced by nitrogen.

To the mixture was further added 1.8 g of 1 % aqueous solution of 2,2'-azobis (2-amidinopropane) hydrochloride as an initiator, followed by polymerization with stirring.

As polymerization progressed, the viscosity of the contents increased, resulting in a translucent mass with the passage of 10 hours, without yielding polymer particles dispersed in a salt solution.

## Claims

1. Aqueous dispersion of a Water-soluble cationic polymer or copolymer, obtainable by polymerizing or copolymerizing a cationic monomer mixture comprising
a) 5 to 100% by mole of one or more of the cationic monomers represented by the general formula (1): 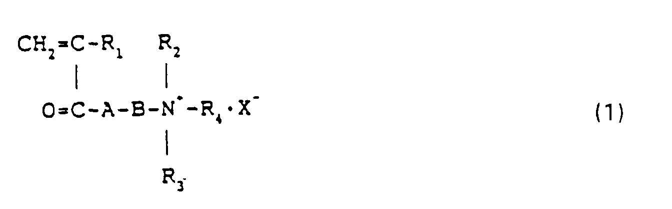 wherein A is an oxygen atom or NH; B is CH₂CH₂, CH₂CH₂CH₂ or CH₂CHOHCH₂; R₁ is a hydrogen atom or CH₃; R₂ and R₃ are independently CH₃ or CH₂CH₃; R₄ is (CH₂)ₙCH₃, wherein n is an integer from 3 to 9, or C₂H₄C₆H₅; X⁻ is an anionic counterion;
b) 0 to 50% by mole of one or more of the cationic monomers represented by the general formula (2): 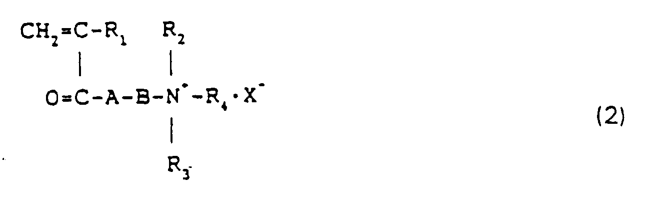 wherein A is an oxygen atom or NH; B is CH₂CH₂, CH₂CH₂CH₂ or CH₂CHOHCH₂; R₁ is a hydrogen atom or CH₃; R₂ and R₃ are independently CH₃ or CH₂CH₃; R₄ is a hydrogen atom, CH₃ or CH₂CH₃, wherein the total carbon atoms of R₂, R₃ and R₄ do not exceed 5, X⁻ is an anionic counterion, and
c) 0 to 95% by mole of methacrylamide or acrylamide in an aqueous salt solution which does not dissolve the resulting polymer or copolymer and in the presence of a cationic polymer dispersant which is soluble in the salt solution and which contains monomer units represented by the general formula (2) in an amount of more than 20% by mole.

2. A process for the preparation of an aqueous dispersion of a water-soluble cationic polymer or copolymer by use of a cationic monomer mixture comprising
a) 5 to 100 % by mole of one or more of cationic monomers represented by the following formula (1): 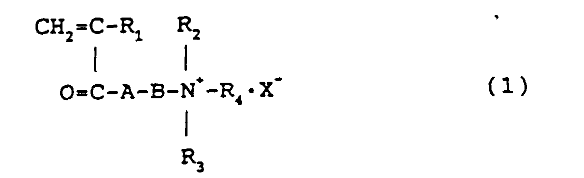 [wherein A=O or NH; B=CH₂CH₂, CH₂CH₂CH₂ or CH₂CHOHCH₂; R₁=H or CH₃; R₂,R₃=CH₃ or CH₂CH₃; R₄=(CH₂)ₙCH₃ (wherein n=3 to 9) or C₂H₄C₆H₅; X⁻= anionic counterion];
b) 0 to 50 % by mole of one or more of cationic monomers represented by the following general formula (2): 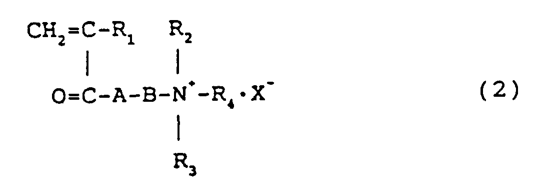 [wherein A=O or NH; B=CH₂CH₂, CH₂CH₂CH₂ or CH₂CHOHCH₂; R₁=H or CH₃; R₂,R₃=CH₃ or CH₂CH₃; R₄=H, CH₃ or CH₂CH₃ (wherein the total carbon atoms of R₂, R₃ and R₄ do not exceed 5), X⁻= anionic counterion], and
c) 0 to 95 % by mole of methacrylamide or acrylamide, the process comprising polymerizing or copolymerizing the cationic monomer mixture in an aqueous salt solution which does not dissolve the resulting polymer or copolymer and in the presence of a cationic polymer dispersant which is soluble in the salt solution and which contains monomer units represented by the general formula (2) in an amount of more than 20 % by mole.

3. A process as claimed in claim 2, wherein the molar ratio of the monomer represented by the general formula (1) to the monomer represented by the general formula (2) is more than 1.

4. A process as claimed in claim 2, wherein the cationic monomer represented by the general formula (1) is obtained by quaternization of a monomer selected from the group consisting of dimethylaminoethyl methacrylate or acrylate, diethylaminoethyl methacrylate or acrylate, dimethylaminohydroxypropyl methacrylate or acrylate, and dimethylaminopropyl methacrylamide or acrylamide, with an alkyl halide having C₄ to C₁₀ carbon atoms or 2-haloethylbenzene.

5. A process as claimed in claim 2, wherein the cationic monomer represented by the general formula (1) is obtained by quaternization of a monomer selected from the group consisting of dimethylaminoethyl methacrylate or acrylate, diethylaminoethyl methacrylate or acrylate, dimethylaminohydroxypropyl methacrylate or acrylate, and dimethylaminopropyl methacrylamide or acrylamide, with a butyl halide.

6. A process as claimed in claim 2, wherein the cationic monomer represented by the general formula (1) is obtained by quaternization of a monomer selected from the group consisting of dimethylaminoethyl methacrylate or acrylate, diethylaminoethyl methacrylate or acrylate, dimethylaminohydroxypropyl methacrylate or acrylate, and dimethylaminopropyl methacrylamide or acrylamide, with a pentyl halide.

7. A process as claimed in claim 2, wherein the cationic monomer represented by the general formula (1) is obtained by quaternization of a monomer selected from the group consisting of dimethylaminoethyl methacrylate or acrylate, diethylaminoethyl methacrylate or acrylate, dimethylaminohydroxypropyl methacrylate or acrylate, and dimethylaminopropyl methacrylamide or acrylamide, with a hexyl halide.

8. A process as claimed in claim 2, wherein the cationic monomer represented by the general formula (1) is obtained by quaternization of a monomer selected from the group consisting of dimethylaminoethyl methacrylate or acrylate, dimethylaminohydroxypropyl methacrylate or acrylate, and dimethylaminopropyl methacrylamide or acrylamide, with a heptyl halide.

9. A process as claimed in claim 2, wherein the cationic monomer represented by the general formula (1) is obtained by quaternization of a monomer selected from the group consisting of dimethylaminoethyl methacrylate or acrylate, dimethylaminohydroxypropyl methacrylate or acrylate, and dimethylaminopropyl methacrylamide or acrylamide, with an octyl halide.

10. A process as claimed in claim 2, wherein the cationic monomer represented by the general formula (1) is obtained by quaternization of a monomer selected from the group consisting of dimethylaminoethyl methacrylate or acrylate, dimethylaminohydroxypropyl methacrylate or acrylate, and dimethylaminopropyl methacrylamide or acrylamide, with a 2-haloethylbenzene.

11. A process as claimed in claim 2, wherein the cationic monomer represented by the general formula (1) is obtained by quaternization of dimethylaminoethyl methacrylate or acrylate with an alkyl halide having C₄ to C₁₀ carbon atoms or a 2-haloethylbenzene.

12. A process as claimed in claim 2, wherein the cationic monomer represented by the general formula (2) is obtained by neutralization with hydrochloric acid or sulfuric acid or by quaternization with methyl chloride or dimethyl sulfate, of a monomer selected from the group consisting of dimethylaminoethyl methacrylate or acrylate, diethylaminoethyl methacrylate or acrylate, dimethylaminohydroxypropyl methacrylate or acrylate, and dimethylaminopropyl methacrylamide or acrylamide.

13. A process as claimed in claim 2, wherein the cationic monomer represented by the general formula (2) is obtained by quaternization of a monomer selected from the group consisting of dimethylaminoethyl methacrylate or acrylate, diethylaminoethyl methacrylate or acrylate, dimethylaminohydroxypropyl methacrylate or acrylate, and dimethylaminopropyl methacrylamide or acrylamide, with methyl chloride or dimethyl sulfate.

14. A process as claimed in claim 2, wherein the cationic polymer dispersant is obtained by polymerization of one or more of monomers selected from the group consisting of neutralization products with hydrochloric acid or sulfuric acid, or quaternized products with methyl chloride or dimethyl sulfate, of a monomer selected from the group consisting of dimethylaminoethyl methacrylate or acrylate, diethylaminoethylmethacrylate or acrylate, dimethylaminohydroxypropylmethacrylate or acrylate, and dimethylaminopropyl methacrylamide or acrylamide.

15. A process as claimed in claim 2, wherein the cationic polymer dispersant is obtained by polymerization of one or more of monomers selected from the group consisting of quaternized products with methyl chloride or dimethyl sulfate, of a monomer selected from the group consisting of dimethylaminoethyl methacrylate or acrylate, diethylaminoethyl methacrylate or acrylate, dimethylaminohydroxypropyl methacrylate or acrylate, and dimethylaminopropyl methacrylamide or acrylamide.

16. A process as claimed in claim 2, wherein the cationic polymer dispersant is obtained by copolymerization of acrylamide with one or more of monomers, in an amount of more than 20% by mole, selected from the group consisting of neutralization products with hydrochloric acid or sulfuric acid, and quaternized products with methyl chloride or dimethyl sulfate, of dimethylaminoethyl methacrylate or acrylate, diethylaminoethyl methacrylate or acrylate, dimethylaminohydroxypropyl methacrylate or acrylate, and dimethylaminopropyl methacrylamide or acrylamide, the cationic polymer dispersant being soluble in the salt solution as a polymerization medium.

17. A process as claimed in claim 2, wherein the cationic polymer dispersant is obtained by copolymerization of acrylamide with one or more of monomers, in an amount of more than 20% by mole, selected from the group consisting of quaternized products with methyl chloride or dimethyl sulfate, of dimethylaminoethyl methacrylate or acrylate, diethylaminoethyl methacrylate or acrylate, dimethylaminohydroxypropyl methacrylate or acrylate, and dimethylaminopropyl methacrylamide or acrylamide, the cationic polymer dispersant being soluble in the salt solution as a polymerization medium.

18. A process as claimed in claim 2, wherein the amount of cationic polymer dispersant is 1 to 10% by weight, based on the total weight of monomers.

19. A process as claimed in claim 2, wherein the salt contained in the salt solution as a polymerization medium is a polyvalent anion salt.

20. A process as claimed in claim 2, wherein the salt contained in the salt solution as a polymerization medium is a polyvalent anion salt selected from the group consisting of sodium sulfate, magnesium sulfate, aluminium sulfate, sodium dihydrogenphosphate, and mixtures thereof.

21. A process as claimed in claim 2, wherein the amount of salt contained in the salt solution as a polymerization medium is more than 15% by weight.

22. The use of the aqueous dispersion of water-soluble polymers according to claim 1 as flocculating agents.

23. The use of the aqueous dispersion of water-soluble polymers according to claim 1 as dehydrating agents.

24. The use of the aqueous dispersion of water-soluble polymers according to claim 1 as a paper chemical in paper manufacturing.

## Patentansprüche

1. Wäßrige Dispersion eines wasserlöslichen kationischen Polymers oder Copolymers, erhältlich durch Polymerisieren oder Copolymerisieren eines kationischen Monomergemisches, umfassend
a) 5 bis 100 Mol-% eines oder mehrerer der kationischen Monomere der allgemeinen Formel (1) 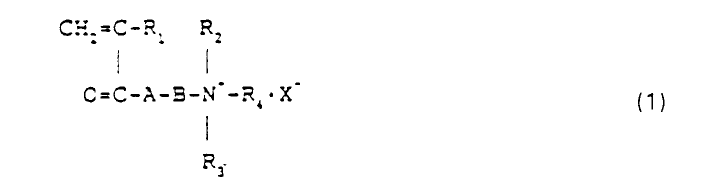 in der A ein Sauerstoffatom oder NH ist, B CH₂CH₂, CH₂CH₂CH₂ oder CH₂CHOHCH₂ ist, der Rest R₁ ein Wasserstoffatom oder CH₃ ist, die Reste R₂ und R₃ unabhängig CH₃ oder CH₂CH₃ sind, der Rest R₄ (CH₂)ₙCH₃ ist, wobei n eine ganze Zahl von 3 bis 9 ist, oder C₂H₄C₆H₅ ist und X⁻ ein anionisches Gegenion ist,
b) 0 bis 50 Mol-% eines oder mehrerer der kationischen Monomere der allgemeinen Formel (2) 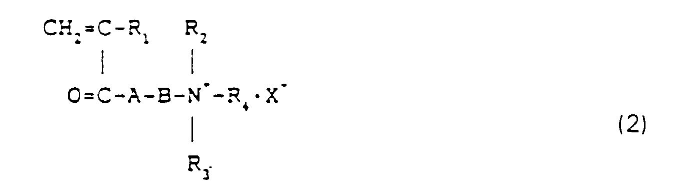 in der A ein Sauerstoffatom oder NH ist, B CH₂CH₂, CH₂CH₂CH₂ oder CH₂CHOHCH₂ ist, der Rest R₁ ein Wasserstoffatom oder CH₃ ist, die Reste R₂ und R₃ unabhängig CH₃ oder CH₂CH₃ sind, der Rest R₄ ein Wasserstoffatom, CH₃ oder CH₂CH₃ ist, wobei die Gesamtzahl der Kohlenstoffatome von R₂, R₃ und R₄ 5 nicht übersteigt und X⁻ ein anionisches Gegenion ist, und
c) 0 bis 95 Mol-% Methacrylamid oder Acrylamid,
in einer wäßrigen Salzlösung, die das resultierende Polymer oder Copolymer nicht löst und in Gegenwart eines kationischen Polymerdispergiermittels, das in der Salzlösung löslich ist und das Monomereinheiten der allgemeinen Formel (2) in einer Menge von mehr als 20 Mol-% enthält.

2. Verfahren zur Herstellung einer wäßrigen Dispersion eines wasserlöslichen kationischen Polymers oder Copolymers durch Verwendung eines kationischen Monomergemisches, umfassend
a) 5 bis 100 Mol-% eines oder mehrerer kationischen Monomere der allgemeinen Formel (1) 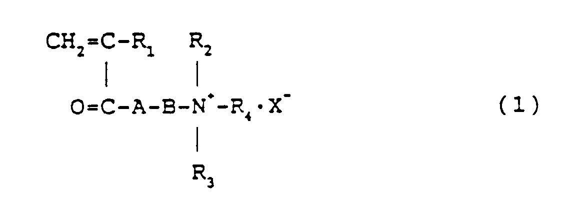 in der A ein Sauerstoffatom oder NH ist, B CH₂CH₂, CH₂CH₂CH₂ oder CH₂CHOHCH₂ ist, der Rest R₁ ein Wasserstoffatom oder CH₃ ist, die Reste R₂ und R₃ CH₃ oder CH₂CH₃ sind, der Rest R₄ (CH₂)ₙCH₃ ist, wobei n gleich 3 bis 9 ist, oder C₂H₄C₆H₅ ist und X⁻ ein anionisches Gegenion ist,
b) 0 bis 50 Mol-% eines oder mehrerer der kationischen Monomere der nachstehenden allgemeinen Formel (2) 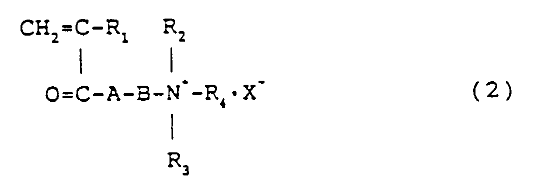 in der A ein Sauerstoffatom oder NH ist, B CH₂CH₂, CH₂CH₂CH₂ oder CH₂CHOHCH₂ ist, der Rest R₁ ein Wasserstoffatom oder CH₃ ist, die Reste R₂ und R₃ CH₃ oder CH₂CH₃ sind, der Rest R₄ ein Wasserstoffatom, CH₃ oder CH₂CH₃ ist, wobei die Gesamtzahl der Kohlenstoffatome der Reste R₂, R₃ und R₄ 5 nicht übersteigt und X⁻ ein anionisches Gegenion ist, und
c) 0 bis 95 Mol-% Methacrylamid oder Acrylamid,
wobei das Verfahren das Polymerisieren oder Copolymerisieren des kationischen Monomergemisches in einer wäßrigen Salzlösung umfaßt, die das resultierende Polymer oder Copolymer nicht löst und in Gegenwart eines kationischen Polymerdispergiermittels, das in der Salzlösung löslich ist und das Monomereinheiten der allgemeinen Formel (2) in einer Menge von mehr als 20 Mol-% enthält.

3. Verfahren nach Anspruch 2, wobei das Molverhältnis des Monomers der allgemeinen Formel (1) zu dem Monomer der allgemeinen Formel (2) größer als 1 ist.

4. Verfahren nach Anspruch 2, wobei das kationische Monomer der allgemeinen Formel (1) erhalten wird durch Quaternisierung eines Monomers, ausgewählt aus der Gruppe bestehend aus Dimethylaminoethylmethacrylat oder -acrylat, Diethylaminoethylmethacrylat oder -acrylat, Dimethylaminohydroxypropylmethacrylat oder -acrylat und Dimethylaminopropylmethacrylamid oder -acrylamid mit einem Alkylhalogenid mit C₄ bis C₁₀ Kohlenstoffatomen oder 2-Halogenethylbenzol.

5. Verfahren nach Anspruch 2, wobei das kationische Monomer der allgemeinen Formel (1) erhalten wird durch Quaternisierung eines Monomers, ausgewählt aus der Gruppe bestehend aus Dimethylaminoethylmethacrylat oder -acrylat, Diethylaminoethylmethacrylat oder -acrylat, Dimethylaminohydroxypropylmethacrylat oder -acrylat und Dimethylaminopropylmethacrylamid oder -acrylamid mit einem Butylhalogenid.

6. Verfahren nach Anspruch 2, wobei das kationische Monomer der allgemeinen Formel (1) erhalten wird durch Quaternisierung eines Monomers, ausgewählt aus der Gruppe bestehend aus Dimethylaminoethylmethacrylat oder -acrylat, Diethylaminoethylmethacrylat oder -acrylat, Dimethylaminohydroxypropylmethacrylat oder -acrylat und Dimethylaminopropylmethacrylamid oder -acrylamid mit einem Pentylhalogenid.

7. Verfahren nach Anspruch 2, wobei das kationische Monomer der allgemeinen Formel (1) erhalten wird durch Quaternisierung eines Monomers, ausgewählt aus der Gruppe bestehend aus Dimethylaminoethylmethacrylat oder -acrylat, Diethylaminoethylmethacrylat oder -acrylat, Dimethylaminohydroxypropylmethacrylat oder -acrylat und Dimethylaminopropylmethacrylamid oder -acrylamid mit einem Hexylhalogenid.

8. Verfahren nach Anspruch 2, wobei das kationische Monomer der allgemeinen Formel (1) erhalten wird durch Quaternisierung eines Monomers, ausgewählt aus der Gruppe bestehend aus Dimethylaminoethylmethacrylat oder -acrylat, Dimethylaminohydroxypropylmethacrylat oder -acrylat und Dimethylaminopropylmethacrylamid oder -acrylamid mit einem Heptylhalogenid.

9. Verfahren nach Anspruch 2, wobei das kationische Monomer der allgemeinen Formel (1) erhalten wird durch Quaternisierung eines Monomers, ausgewählt aus der Gruppe bestehend aus Dimethylaminoethylmethacrylat oder -acrylat, Dimethylaminohydroxypropylmethacrylat oder -acrylat und Dimethylaminopropylmethacrylamid oder -acrylamid mit einem Octylhalogenid.

10. Verfahren nach Anspruch 2, wobei das kationische Monomer der allgemeinen Formel (1) erhalten wird durch Quaternisierung eines Monomers, ausgewählt aus der Gruppe bestehend aus Dimethylaminoethylmethacrylat oder -acrylat, Dimethylaminohydroxypropylmethacrylat oder -acrylat und Dimethylaminopropylmethacrylamid oder -acrylamid mit einem 2-Halogenethylbenzol.

11. Verfahren nach Anspruch 2, wobei das kationische Monomer der allgemeinene Formel (1) erhalten wird durch Quaternisierung von Dimethylaminoethylmethacrylat oder -acrylat mit einem Alkylhalogenid mit C₄ bis C₁₀-Kohlenstoffatomen oder einem 2-Halogenethylbenzol.

12. Verfahren nach Anspruch 2, wobei das kationische Monomer der allgemeinen Formel (2) erhalten wird durch Neutralisation mit Salzsäure oder Schwefelsäure oder durch Quaternisierung mit Methylchlorid oder Dimethylsulfat, eines Monomers, ausgewählt aus der Gruppe bestehend aus Dimethylaminoethylmethacrylat oder -acrylat, Diethylaminoethylmethacrylat oder -acrylat, Dimethylaminohydroxypropylmethacrylat oder -acrylat und Dimethylaminopropylmethacrylamid oder -acrylamid.

13. Verfahren nach Anspruch 2, wobei das kationische Monomer der allgemeinen Formel (2) erhalten wird durch Quaternisierung eines Monomers, ausgewählt aus der Gruppe bestehend aus Dimethylaminoethylmethacrylat oder -acrylat, Diethylaminoethylmethacrylat oder -acrylat, Dimethylaminohydroxypropylmethacrylat oder -acrylat und Dimethylaminopropylmethacrylamid oder -acrylamid mit Methylchlorid oder Dimethylsulfat.

14. Verfahren nach Anspruch 2, wobei das kationische Polymerdispergiermittel erhalten wird durch Polymerisieren eines oder mehrerer Monomere, ausgewählt aus der Gruppe bestehend aus Neutralisationsprodukten mit Salzsäure oder Schwefelsäure oder quaternisierten Produkten mit Methylchlorid oder Dimethylsulfat eines Monomers, ausgewählt aus der Gruppe bestehend aus Dimethylaminoethylmethacrylat oder -acrylat, Diethylaminoethylmethacrylat oder -acrylat, Dimethylaminohydroxypropylmethacrylat oder -acrylat und Dimethylaminopropylmethacrylamid oder -acrylamid.

15. Verfahren nach Anspruch 2, wobei das kationische Polymerdispergiermittel erhalten wird durch Polymerisieren eines oder mehrerer Monomere, ausgewählt aus der Gruppe bestehend aus quaternisierten Produkten mit Methylchlorid oder Dimethylsulfat eines Monomers, ausgewählt aus der Gruppe bestehend aus Dimethylaminoethylmethacrylat oder -acrylat, Diethylaminoethylmethacrylat oder -acrylat, Dimethylaminohydroxypropylmethacrylat oder -acrylat und Dimethylaminopropylmethacrylamid oder -acrylamid.

16. Verfahren nach Anspruch 2, wobei das kationische Polymerdispergiermittel erhalten wird durch Copolymerisieren von Acrylamid mit einem oder mehreren Monomeren in einer Menge von mehr als 20 Mol-%, ausgewählt aus der Gruppe bestehend aus Neutralisationsprodukten mit Salzsäure oder Schwefelsäure und quaternisierten Produkten mit Methylchlorid oder Dimethylsulfat von Dimethylaminoethylmethacrylat oder -acrylat, Diethylaminoethylmethacrylat oder -acrylat, Dimethylaminohydroxypropylmethacrylat oder -acrylat und Dimethylaminopropylmethacrylamid oder -acrylamid, wobei das kationische Polymerdispergiermittel löslich ist in der Salzlösung als ein Polymerisationsmedium.

17. Verfahren nach Anspruch 2, wobei das kationische Polymerdispergiermittel erhalten wird durch Copolymerisieren von Acrylamid mit einem oder mehreren Monomeren in einer Menge von mehr als 20 Mol-%, ausgewählt aus der Gruppe bestehend aus quaternisierten Produkten mit Methylchlorid oder Dimethylsulfat von Dimethylaminoethylmethacrylat oder -acrylat, Diethylaminoethylmethacrylat oder -acrylat, Dimethylaminohydroxypropylmethacrylat oder -acrylat und Dimethylaminopropylmethacrylamid oder -acrylamid, wobei das kationische Polymerdispergiermittel löslich ist in der Salzlösung als ein Polymerisationsmedium.

18. Verfahren nach Anspruch 2, wobei die Menge des kationischen Polymerdispergiermittels, bezogen auf das Gesamtgewicht der Monomere, 1 bis 10 Gew.-% beträgt.

19. Verfahren nach Anspruch 2, wobei das Salz, das in dem Salzlösung-Polymerisationsmedium enthalten ist, ein mehrwertiges Anionensalz ist.

20. Verfahren nach Anspruch 2, wobei das Salz, das in dem Salzlösung-Polymerisationsmedium enthalten ist, ein mehrwertiges Anionensalz ist, ausgewählt aus der Gruppe bestehend aus Natriumsulfat, Magnesiumsulfat, Aluminiumsulfat, Natriumdihydrogenphosphat und Gemischen davon.

21. Verfahren nach Anspruch 2, wobei die Menge des Salzes, das in dem Salzlösung-Polymerisationsmedium enthalten ist, größer als 15 Gew.-% ist.

22. Die Verwendung der wäßrigen Dispersion des wasserlöslichen Polymers gemäß Anspruch 1 als Flockungsmittel.

23. Die Verwendung der wäßrigen Dispersion des wasserlöslichen Polymers gemäß Anspruch 1 als Dehydratisierungsmittel.

24. Die Verwendung der wäßrigen Dispersion des wasserlöslichen Polymers gemäß Anspruch 1 als Papierchemikalie bei der Papierherstellung.

## Revendications

1. Dispersion aqueuse d'un polymère ou copolymère cationique hydrosoluble, pouvant être obtenue par polymérisation ou copolymérisation d'un mélange de monomères cationiques comprenant
a) 5 à 100% en moles d'un ou plusieurs des monomères cationiques représentés par la formule générale (1): 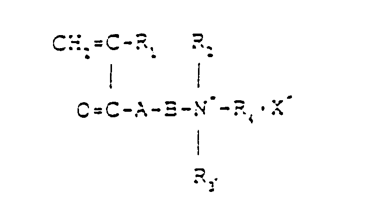 où A est un atome d'oxygène ou NH; B est CH₂CH₂, CH₂CH₂CH₂ ou CH₂CHOHCH₂; R₁ est un atome d'hydrogène ou CH₃; R₂ et R₃ sont, indépendamment l'un de l'autre, CH₃ ou CH₂CH₃; R₄ est (CH₂)ₙCH₃, où n est un entier de 3 à 9, ou C₂H₄C₆H₅; X⁻ est un ion complémentaire anionique;
b) 0 à 50% en moles d'un ou plusieurs des monomères cationiques représentés par la formule générale (2): 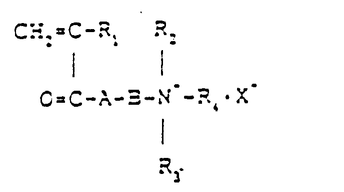 où A est un atome d'oxygène ou NH; B est CH₂CH₂, CH₂CH₂CH₂ ou CH₂CHOHCH₂; R₁ est un atome d'hydrogène ou CH₃; R₂ et R₃ sont, indépendamment l'un de l'autre, CH₃ ou CH₂CH₃; R₄ est un atome d'hydrogène, CH₃ ou CH₂CH₃, où le nombre total d'atomes de carbone de R₂, R₃ et R₄ ne dépasse pas 5; X⁻ est un ion complémentaire anionique; et
c) 0 à 95% en moles de méthacrylamide ou d'acrylamide dans une solution saline aqueuse, qui ne dissout pas le polymère ou le copolymère résultant et en présence d'un dispersant polymère cationique qui est soluble dans la solution saline et qui contient des unités monomères représentées par la formule générale (2) en une quantité de plus de 20% en moles.

2. Procédé pour la préparation d'une dispersion aqueuse d'un polymère ou copolymère cationique hydrosoluble par utilisation d'un mélange de monomères cationiques comprenant
a) 5 à 100% en moles d'un ou plusieurs des monomères cationiques représentés par la formule (1) suivante: 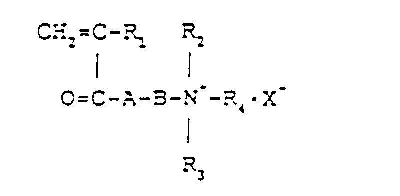 [où A = O ou NH; B = CH₂CH₂, CH₂CH₂CH₂ ou CH₂CHOHCH₂; R₁ = H ou CH₃; R₂,R₃ = CH₃ ou CH₂CH₃; R₄ = (CH₂)ₙCH₃ (où n = 3 à 9) ou C₂H₄C₆H₅; X⁻ = ion complémentaire anionique];
b) 0 à 50% en moles d'un ou plusieurs des monomères cationiques représentés par la formule générale (2) suivante: 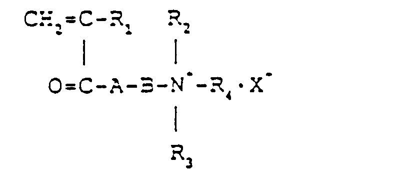 [où A = O ou NH; B = CH₂CH₂, CH₂CH₂CH₂ ou CH₂CHOHCH₂; R₁ = H ou CH₃; R₂,R₃ = CH₃ ou CH₂CH₃; R₄ = H, CH₃ ou CH₂CH₃ (où le nombre total d'atomes de carbone de R₂, R₃ et R₄ ne dépasse pas 5), X⁻ = ion complémentaire anionique]; et
c) 0 à 95% en moles de méthacrylamide ou d'acrylamide, le procédé comprenant la polymérisation ou copolymérisation du mélange de monomères cationiques dans une solution saline aqueuse, qui ne dissout pas le polymère ou le copolymère résultant et en présence d'un dispersant polymère cationique qui est soluble dans la solution saline et qui contient des unités monomères représentées par la formule générale (2) en une quantité de plus de 20% en moles.

3. Procédé selon la revendication 2, dans lequel le rapport molaire du monomère représenté par la formule générale (1) au monomère représenté par la formule générale (2) est supérieur à 1.

4. Procédé selon la revendication 2, dans lequel le monomère cationique représenté par la formule générale (1) est obtenu par quaternisation d'un monomère choisi dans le groupe consistant en méthacrylate ou acrylate de diméthylaminoéthyle, méthacrylate ou acrylate de diéthylaminoéthyle, méthacrylate ou acrylate de diméthylaminohydroxypropyle, et diméthylaminopropyl méthacrylamide ou acrylamide, avec un halogénure d'alkyle en C₄ à C₁₀ ou le 2-halogénoéthylbenzène.

5. Procédé selon la revendication 2, dans lequel le monomère cationique représenté par la formule générale (1) est obtenu par quaternisation d'un monomère choisi dans le groupe consistant en méthacrylate ou acrylate de diméthylaminoéthyle, méthacrylate ou acrylate de diéthylaminoéthyle, méthacrylate ou acrylate de diméthylaminohydroxypropyle, et diméthylaminopropyl méthacrylamide ou acrylamide, avec un halogénure de butyle.

6. Procédé selon la revendication 2, dans lequel le monomère cationique représenté par la formule générale (1) est obtenu par quaternisation d'un monomère choisi dans le groupe consistant en méthacrylate ou acrylate de diméthylaminoéthyle, méthacrylate ou acrylate de diéthylaminoéthyle, méthacrylate ou acrylate de diméthylaminohydroxypropyle, et diméthylaminopropyl méthacrylamide ou acrylamide, avec un halogénure de pentyle.

7. Procédé selon la revendication 2, dans lequel le monomère cationique représenté par la formule générale (1) est obtenu par quaternisation d'un monomère choisi dans le groupe consistant en méthacrylate ou acrylate de diméthylaminoéthyle, méthacrylate ou acrylate de diéthylaminoéthyle, méthacrylate ou acrylate de diméthylaminohydroxypropyle, et diméthylaminopropyl méthacrylamide ou acrylamide, avec un halogénure d'hexyle.

8. Procédé selon la revendication 2, dans lequel le monomère cationique représenté par la formule générale (1) est obtenu par quaternisation d'un monomère choisi dans le groupe consistant en méthacrylate ou acrylate de diméthylaminoéthyle, méthacrylate ou acrylate de diméthylaminohydroxypropyle, et diméthylaminopropyl méthacrylamide ou acrylamide, avec un halogénure d'heptyle.

9. Procédé selon la revendication 2, dans lequel le monomère cationique représenté par la formule générale (1) est obtenu par quaternisation d'un monomère choisi dans le groupe consistant en méthacrylate ou acrylate de diméthylaminoéthyle, méthacrylate ou acrylate de diméthylaminohydroxypropyle, et diméthylaminopropyl méthacrylamide ou acrylamide, avec un halogénure d'octyle.

10. Procédé selon la revendication 2, dans lequel le monomère cationique représenté par la formule générale (1) est obtenu par quaternisation d'un monomère choisi dans le groupe consistant en méthacrylate ou acrylate de diméthylaminoéthyle, méthacrylate ou acrylate de diméthylaminohydroxypropyle, et diméthylaminopropyl méthacrylamide ou acrylamide, avec un 2-halogénoéthylbenzène.

11. Procédé selon la revendication 2, dans lequel le monomère cationique représenté par la formule générale (1) est obtenu par quaternisation de méthacrylate ou acrylate de diméthylaminoéthyle avec un halogénure d'alkyle en C₄ à C₁₀ ou un 2-halogénoéthylbenzène.

12. Procédé selon la revendication 2, dans lequel le monomère cationique représenté par la formule générale (2) est obtenu par neutralisation avec de l'acide chlorhydrique ou de l'acide sulfurique ou par quaternisation avec du chlorure de méthyle ou du sulfate de diméthyle d'un monomère choisi dans le groupe consistant en méthacrylate ou acrylate de diméthylaminoéthyle, méthacrylate ou acrylate de diéthylaminoéthyle, méthacrylate ou acrylate de diméthylaminohydroxypropyle, et diméthylaminopropyl méthacrylamide ou acrylamide.

13. Procédé selon la revendication 2, dans lequel le monomère cationique représenté par la formule générale (2) est obtenu par quaternisation d'un monomère choisi dans le groupe consistant en méthacrylate ou acrylate de diméthylaminoéthyle, méthacrylate ou acrylate de diéthylaminoéthyle, méthacrylate ou acrylate de diméthylaminohydroxypropyle, et diméthylaminopropyl méthacrylamide ou acrylamide, avec du chlorure de méthyle ou du sulfate de diméthyle.

14. Procédé selon la revendication 2, dans lequel le dispersant polymère cationique est obtenu par polymérisation d'un ou plusieurs des monomères choisis dans le groupe consistant en des produits de neutralisation avec de l'acide chlorhydrique ou de l'acide sulfurique, ou des produits quaternisés avec du chlorure de méthyle ou du sulfate de diméthyle, d'un monomère choisi dans le groupe consistant en méthacrylate ou acrylate de diméthylaminoéthyle, méthacrylate ou acrylate de diéthylaminoéthyle, méthacrylate ou acrylate de diméthylaminohydroxypropyle, et diméthylaminopropyl méthacrylamide ou acrylamide.

15. Procédé selon la revendication 2, dans lequel le dispersant polymère cationique est obtenu par polymérisation d'un ou plusieurs des monomères choisis dans le groupe consistant en des produits quaternisés avec du chlorure de méthyle ou du sulfate de diméthyle, d'un monomère choisi dans le groupe consistant en méthacrylate ou acrylate de diméthylaminoéthyle, méthacrylate ou acrylate de diéthylaminoéthyle, méthacrylate ou acrylate de diméthylaminohydroxypropyle, et diméthylaminopropyl méthacrylamide ou acrylamide.

16. Procédé selon la revendication 2, dans lequel le dispersant polymère cationique est obtenu par copolymérisation d'acrylamide avec un ou plusieurs des monomères, en une quantité de plus de 20% en moles, choisis dans le groupe consistant en des produits de neutralisation avec de l'acide chlorhydrique ou de l'acide sulfurique, et des produits quaternisés avec du chlorure de méthyle ou du sulfate de diméthyle, de méthacrylate ou acrylate de diméthylaminoéthyle, méthacrylate ou acrylate de diéthylaminoéthyle, méthacrylate ou acrylate de diméthylaminohydroxypropyle, et diméthylaminopropyl méthacrylamide ou acrylamide, le dispersant polymère cationique étant soluble dans la solution saline en tant que milieu de polymérisation.

17. Procédé selon la revendication 2, dans lequel le dispersant polymère cationique est obtenu par copolymérisation d'acrylamide avec un ou plusieurs des monomères, en une quantité de plus de 20% en moles, choisis dans le groupe consistant en des produits de quaternisation avec du chlorure de méthyle ou du sulfate de diméthyle, de méthacrylate ou acrylate de diméthylaminoéthyle, méthacrylate ou acrylate de diéthylaminoéthyle, méthacrylate ou acrylate de diméthylaminohydroxypropyle, et diméthylaminopropyl méthacrylamide ou acrylamide, le dispersant polymère cationique étant soluble dans la solution saline en tant que milieu de polymérisation.

18. Procédé selon la revendication 2, dans lequel la quantité de dispersant polymère cationique est de 1 à 10% en poids, par rapport au poids total des monomères.

19. Procédé selon la revendication 2, dans lequel le sel contenu dans la solution saline en tant que milieu de polymérisation est un sel d'anion polyvalent.

20. Procédé selon la revendication 2, dans lequel le sel contenu dans la solution saline en tant que milieu de polymérisation est un sel d'anion polyvalent choisi dans le groupe consistant en sulfate de sodium, sulfate de magnésium, sulfate d'aluminium, dihydrogénophosphate de sodium et leurs mélanges.

21. Procédé selon la revendication 2, dans lequel la quantité de sel contenue dans la solution saline en tant que milieu de polymérisation est de plus de 15% en poids.

22. Utilisation de la dispersion aqueuse de polymères hydrosolubles selon la revendication 1 comme agents de floculation.

23. Utilisation de la dispersion aqueuse de polymères hydrosolubles selon la revendication 1 comme agents de déshydratation.

24. Utilisation de la dispersion aqueuse de polymères hydrosolubles selon la revendication 1 comme produit chimique pour papier dans la fabrication du papier.
